# EUROPÄISCHE PATENTSCHRIFT

(11) **EP 4 225 697 B1**
(45) Veröffentlichungstag und Bekanntmachung des Hinweises auf die Patenterteilung: **27.09.2023**
(21) Anmeldenummer: 22776889.2
(22) Anmeldetag: 05.09.2022
(51) Int. Cl.: C01B 25/30, C01D 15/02, C01D 15/08, C01G 45/02, C01G 51/04, C01G 53/04, C01G 53/10, C22B 3/00, C22B 3/44, C22B 7/00, C22B 23/00, C22B 26/12, H01M 10/54, H01M 10/052

(54) **VERFAHREN ZUR RÜCKGEWINNUNG VON METALLEN AUS SCHWARZER MASSE**
METHOD FOR RECOVERING METALS FROM BLACK MASS
PROCÉDÉ PERMETTANT LA RÉCUPÉRATION DE MÉTAUX CONTENUS DANS UNE MASSE NOIRE

(30) Priorität: 07.09.2021 DE 102021123151
(43) Veröffentlichungstag der Anmeldung: 16.08.2023
(73) Patentinhaber: Aurubis AG, 20539 Hamburg (DE)
(72) Erfinder: SURIANO, Anne-Marie, 22303 Hamburg (DE); BRYSON, Leslie James, 22609 Hamburg (DE); ESCHEN, Marcus, 48308 Senden (DE)
(74) Vertreter: Müller Verweyen
(86) Internationale Anmeldenummer: PCT/EP2022/074579
(87) Internationale Veröffentlichungsnummer: WO 2023/036726

(56) Entgegenhaltungen:
- WO-A1-2020/212587
- CN-A- 109 852 807
- US-B1- 9 034 294
- WANG JINGXIU ET AL: "Evaluation of ozone as an efficient and sustainable reagent for chalcopyrite leaching: Process optimization and oxidative mechanism", JOURNAL OF INDUSTRIAL AND ENGINEERING CHEMISTRY, THE KOREAN SOCIETY OF INDUSTRIAL AND ENGINEERING CHEMISTRY, KOREA, Bd. 104, 28. August 2021 (2021-08-28), Seiten 333-344, XP086821550, ISSN: 1226-086X, DOI: 10.1016/J.JIEC.2021.08.036 [gefunden am 2021-08-28]

## Beschreibung

Die Erfindung betrifft ein Verfahren zur Rückgewinnung von Metallen aus lithiumhaltiger schwarzer Masse.

Die weltweite Batterieproduktion wird bis 2030 schätzungsweise mehr als 4 TWh erreichen. Die für diese Produktion benötigten Ressourcen, nämlich Rohstoffe wie Lithium, Graphit, Nickel, Kobalt und Mangan, werden dementsprechend im Jahr 2030 ein geschätztes Volumen von mehr als 10 Millionen Tonnen erreichen. Die benötigten Rohstoffe werden hauptsächlich aus primären Quellen wie Erzen stammen, dennoch wird der Anteil der sekundären Quellen aus dem Recycling in Zukunft steigen. Bei den sekundären Quellen kann es sich um Lithium-Ionen-Batterien am Ende ihrer Lebensdauer oder um Materialien und ganze Batterien handeln, die in einem Produktionsprozess aussortiert wurden.

Solche sekundären Quellen werden zu einer so genannten schwarzen Masse aufbereitet, die ein Gemisch aus Lithium-Ionen-Batterieschrott und/oder Schrott aus Batterieproduktionsprozessen ist, das zu einem feinen Pulver verarbeitet wird. So enthält die schwarze Masse in der Regel eine Mischung aus aktiven Anoden- und/oder Kathodenmaterialien von Lithium-Ionen-Batterien. Außerdem kann die schwarze Masse Kunststoffe und/oder Stromleiter wie Kupfer und/oder Aluminium enthalten.

Im Stand der Technik sind verschiedene Verfahren zur Rückgewinnung der Hauptelemente aus der schwarzen Masse bekannt. Neben pyrometallurgischen Verfahrensrouten sind mehrere hydrometallurgische Verfahrensrouten bekannt.

So ist beispielsweise aus der EP 3431618 A1 ein Verfahren bekannt, bei dem Lithium-Ionen-Batterieschrott mit einem sich anschließenden Al-Entfernungsschritt, gefolgt von einem Fe-Entfernungsschritt, gelaugt wird. Danach wird ein Schritt zur Rückgewinnung von Ni und Co durchgeführt, so dass am Ende des Prozesses Li extrahiert werden kann.

In der WO 2020/212587 A1 wird ein Verfahren offengelegt, bei dem Lithium vor dem Rückgewinnungsprozess für Ni und Co extrahiert wird.

Die CN 109 852 807 A offenbart ein Verfahren zur Durchführung einer Oxidationsbehandlung an gebrauchten Li-Ionen-Batterien, wobei oxidierendes Gas in eine wässrige Lösung mit pulverisierten Li-Ionen-Batterien eingeleitet wird.

Weiterhin offenbart die US 9 034 294 B1 ein Verfahren zur Herstellung von Lithiumcarbonat aus lithiumchloridhaltigen Solen.

Aus der Veröffentlichung Wang Jingxiu et al: "Evalation of ozone as an efficient and sustainable reagent for chalcopyrite leaching: Process optimization and oxidative mechanism", Journal of Industrial and Engineering Chemistry, The Korean Society of Industrial and Engineering Chemistry, Korea, Bd. 104, 28. August 2021 ist ein Verfahren zur Laugung von Kupfer aus Kupferkies mit Ozon bekannt.

Diese Verfahren haben niedrige Extraktionsraten und/oder bieten eine geringe Selektivität in Zwischenprodukten.

Die Aufgabe der Erfindung ist es, ein kosteneffizientes Verfahren zur Rückgewinnung von Metallen aus schwarzer Masse bereitzustellen, das eine hohe Selektivität für die zurückgewonnenen Metalle ermöglicht.

Die Erfindung löst dieses Problem mit den Merkmalen der unabhängigen Ansprüche.

Es wird ein Verfahren zur Rückgewinnung von Metallen aus schwarzer Masse mit den folgenden Schritten in der folgenden Reihenfolge vorgeschlagen:
- Schritt (a) Bereitstellen einer schwarzen Masse, die Li enthält;
- Schritt (b) Zugabe von Wasser zu der schwarzen Masse und Herstellung einer Suspension der schwarzen Masse in Wasser;
- Schritt (c) Dosierung von Ozon als Oxidationsmittel zu der Suspension unter Rühren der Suspension;
- Schritt (d) Filtrieren und Abtrennen des Filtrats, das in Wasser gelöstes LiOH enthält, von einem an Li verarmten Rückstand der schwarzen Masse, vorzugsweise als Feststoff oder Schlamm.

Schwarze Masse im Sinne der vorliegenden Erfindung ist Material aus ausrangierten Batterien auf Lithiumbasis, insbesondere Lithium-Ionen-Batterien, und/oder ausrangierte Teile davon, und/oder ausrangierte Materialien aus Produktionsprozessen von Lithium-Ionen-Batterien, wie aktive Kathodenmaterialien, die nie vollständig in eine Batterie eingebaut wurden. Die oben genannten Ausgangsmaterialien werden mechanisch zu einem Material verarbeitet, das dann als schwarze Masse bezeichnet wird und ein großes Verhältnis von Oberfläche zu Masse aufweist. Die typisch schwarze Farbe der schwarzen Masse kann auf Kohlenstoff, insbesondere Graphit oder Carbon Black, zurückgeführt werden, der häufig in aktiven Anodenmaterialien von Li-Ionen-Batterien verwendet wird. Die schwarze Masse ist jedoch nicht auf das Vorhandensein eines ausreichenden Anteils an Kohlenstoff beschränkt, um die schwarze Masse schwarz zu färben, da es nicht unbedingt erforderlich ist, dass in der schwarzen Masse Carbon Black vorhanden ist.

Schwarze Masse enthält daher in der Regel mehrere oder alle der folgenden Elemente: Lithium (Li), Kohlenstoff (C), Kobalt (Co), Nickel (Ni), Mangan (Mn), Eisen (Fe), Kupfer (Cu), Aluminium (Al), Phosphor (P), Fluor (F).

Je nach Ausgangsmaterial der schwarzen Masse können die Anteile der Metalle, die in einem Recyclingprozess zurückgewonnen werden sollen, sehr unterschiedlich sein oder sogar bei Null liegen. Unterschiedliche Batteriechemien, die z.B. als NMC, NCA, LFP bekannt sind, können zu unterschiedlichen Anteilen oder zum Fehlen wertvoller Metalle, z.B. Co, Ni oder Mn, führen. So sind unterschiedliche Bestandteile mit anderen Elementen in verschiedenen Zusammensetzungen möglich. Die schwarze Masse im Sinne der Erfindung enthält jedoch das Element Li, wenn der Prozess zur Rückgewinnung der Metalle begonnen wird. Die Quelle des Li in der schwarzen Masse kann jedoch variieren, z.B. kann es chemisch im aktiven Kathodenmaterial gebunden sein und/oder metallisches Li sein, insbesondere in/um das aktive Anodenmaterial.

In Bezug auf Schritt (b) wird weiter vorgeschlagen, dass die schwarze Masse in Wasser mit einer Masse im Bereich von 10 g bis 300 g, vorzugsweise im Bereich von 10 g bis 250 g, weiter bevorzugt im Bereich von 180 g bis 220 g, pro 1 1 Wasser in Suspension gebracht wird. Zum Beispiel werden 200 g schwarze Masse in 1 1 Wasser suspendiert.

In Schritt (c) des vorgeschlagenen Verfahrens wird Ozon als Oxidationsmittel in die Suspension dosiert, während die Suspension gerührt wird. Vorzugsweise wird Ozon in dem Wasser der Suspension gelöst. Somit wird die schwarze Masse oder zumindest Teile der schwarzen Masse mit Ozon oxidiert. Ozon (Os) ist als starkes Oxidationsmittel bekannt. Die Verwendung von Ozon als Oxidationsmittel ist jedoch mit einigen Nachteilen verbunden, da Ozon gegenüber Disauerstoff instabil ist und sich schnell zersetzt. Die Halbwertszeit von Ozon verringert sich weiter, wenn es in Wasser gelöst wird, und sie verringert sich mit steigender Temperatur noch weiter, was zu einer sehr geringen Effizienz des Verfahrens führt und sogar dazu führen kann, dass das Ozon nicht in der beabsichtigten Weise reagiert, wenn es bei hohen Temperaturen in Wasser gelöst wird. Die Löslichkeit von Ozon in Wasser ist sehr gering.

Es hat sich gezeigt, dass durch Rühren der Suspension von schwarzer Masse in Wasser der Stoffaustausch so weit erhöht werden kann, dass das Ozon mit den Partikeln der schwarzen Masse, insbesondere mit der Oberfläche der Partikel der schwarzen Masse, in der Suspension reagieren kann, bevor sich das Ozon zersetzt. Der effektive Einsatz von Ozon beginnt bei hohen Rührgeschwindigkeiten und wird bei weiter erhöhten Rührgeschwindigkeiten noch effektiver, so dass sehr hohe Oxidationspotentiale (>850 mV) erzeugt werden können.

Daher wird weiter vorgeschlagen, dass die Suspension intensiv gerührt oder mit hohen Rührgeschwindigkeiten gerührt wird, während Ozon als Oxidationsmittel in die Suspension dosiert wird. Vorzugsweise wird in Schritt (c) ein Oxidations- /Reduktionspotenzial (ORP) von >850 mV erzeugt, indem der Suspension Ozon zudosiert wird, während die Suspension gerührt wird. Das ORP kann durch sehr intensives Rühren während des Schritts (c) weiter auf >1200 mV erhöht werden. Ozon ist in dieser Anwendung um eine Größenordnung billiger als Oxidationsmittel wie Persulfat, die in alternativen Rückgewinnungsverfahren verwendet werden. Ozon als starkes Oxidationsmittel mit einem Redoxpotential von > 850 mV oxidiert Co und Mn und ist für die Rückgewinnung nicht darauf angewiesen, dass diese bereits im Co(III)- und Mn(IV)-Zustand vorliegen, so dass schwarze Massen mit unterschiedlicher Mineralogie und Vorbehandlung erfolgreich verarbeitet werden können.

Es wird ferner vorgeschlagen, dass durch Rühren der Suspension während Schritt (c) eine turbulente Strömung in der Suspension erzeugt wird.

Vorzugsweise liegt das intensive Rühren oder das Rühren mit hohen Rührgeschwindigkeiten über einem Schwellenwert, über dem der Anteil des Ozons, der mit der schwarzen Masse reagieren kann, größer ist als der Anteil des Ozons, der sich vorzeitig zu Beginn von Schritt (c) zersetzt.

Mit anderen Worten: Nach dem vorgeschlagenen Verfahren kann die Suspension aus Wasser und schwarzer Masse mit Ozon ausgelaugt werden, insbesondere in einer neutralen Laugung, wobei eine sehr hohe Selektivität für Li erreicht werden kann.

In Bezug auf Schritt (d) ermöglicht das Filtrat des vorgeschlagenen Verfahrens das Abtrennen von in Wasser gelöstem LiOH (Lithiumhydroxid) vom restlichen Material der schwarzen Masse, das dann weiteren Verfahrensschritten zugeführt werden kann.

Das vorgeschlagene Verfahren hat eine sehr hohe Selektivität für Li mit sehr geringen Anteilen anderer Bestandteile als in Wasser gelöstes LiOH. Die Laugung ist äußerst selektiv gegenüber Ni, Co und Mn bis unterhalb der Nachweisbarkeit, die typischerweise in verbrauchtem Lithium-Ionen-Batteriematerial und damit in der schwarzen Masse vorhanden sind. Die hohe Selektivität für Li kann auch für eine breite Auswahl von Mineralogien der schwarzen Massen und Vorbehandlungen erreicht werden. Darüber hinaus ermöglicht das vorgeschlagene Verfahren auch hohe Extraktionsraten von Li >90%. Daher ist das Verfahren sehr effizient und wird vorzugsweise als Batch-Verfahren durchgeführt, wobei eine Rezirkulation aufgrund der hohen Selektivität möglich und sehr vorteilhaft ist, wie weiter unten beschrieben. Insbesondere kann eine Verunreinigung des zurückgewonnenen Lithiums mit Alkalielementen, insbesondere Na und/oder K, vermieden werden.

Die vollständige hydrometallurgische Entfernung von Li verhindert die Emission von Kohlenstoffgas (COx), das bei der Zersetzung von Graphit, Carbon Black und/oder organischen Bestandteilen in der schwarzen Masse entsteht und sich bei hohen Temperaturen verflüchtigt.

Dem an Li verarmten Rückstand der schwarzen Masse in Form von Feststoffen und/oder Schlämmen wird das Li bereits zu einem frühen Zeitpunkt im Verfahren der Rückgewinnung entzogen. Durch die Extraktion am Anfang des Verfahrens kann der Rückstand, der wertvolle Elemente wie z.B. Ni, Co, Mn enthält, unabhängig mit anderen Verarbeitungsoptionen verarbeitet werden. Darüber hinaus werden Lithiumverluste an andere Produkte und Zwischenprodukte durch eine niedrige Wascheffizienz oder Co-Ausfällung reduziert.

Außerdem ist der Bedarf an Natrium (Na) durch den Einsatz von Ozon sehr gering.

Erfindungsgemäß wird gefordert, dass
- in Schritt (c) die Suspension mit einer Scherrate größer als 11000s⁻¹, vorzugsweise größer als 25000s⁻¹, weiter vorzugsweise größer als 27000s⁻¹, weiter bevorzugt größer als 29000s⁻¹, beispielsweise 30000s⁻¹ in der Suspension gerührt wird. Eine hohe Scherrate, insbesondere über 11000s⁻¹, beispielsweise 12000s⁻¹, vorzugsweise über 29000s⁻¹, erhöht den Stoffaustausch in ausreichendem Maße, so dass Ozon mit der schwarzen Masse reagieren kann, bevor es sich zersetzt. Bei einer Scherrate von über 11000s⁻¹, beispielsweise 12000s⁻¹, kann ein ausreichend hohes ORP erreicht werden, um die Suspension aus Wasser und schwarzer Masse mit Ozon auszulaugen, wobei noch höhere Scherraten zu einem noch höheren ORP führen können. Bei einer Scherrate von größer als 29000s⁻¹ kann beispielsweise ein ORP von >850 mV erreicht werden, während noch höhere Scherraten zu einem noch höheren ORP, z.B. >1200 mV, führen können.

Beispielsweise kann eine Scherrate in einem Fluid zwischen zwei parallelen Platten durch die relative Geschwindigkeit der beiden Platten geteilt durch den Abstand der Platten bestimmt werden.

Gemäß einer weiteren Ausführungsform wird vorgeschlagen, dass Schritt (c) für mindestens 3h, vorzugsweise mindestens 3,5h, beispielsweise 4h, durchgeführt wird.

Die Konzentration des im Wasser der Suspension gelösten Li steigt mit der Zeit bis zur maximalen Extraktionsrate, die z.B. innerhalb von 4 Stunden erreicht werden kann. Darüber hinaus ist die Oxidation von Co und Mn auch von der Reaktionsdauer abhängig, wobei eine längere Reaktionsdauer eine vollständige Rückgewinnung aus der Lösung ermöglicht, z.B. nach 3 Stunden für Mn und nach 4 Stunden für Co. Die Co- und Mo-Oxide werden also ausgefällt, nachdem sie in der Lösung gelöst wurden. Daher ermöglicht die Durchführung von Schritt (c) für die oben genannte Dauer eine sehr hohe Selektivität des Extraktionsverfahrens.

Es wird weiter vorgeschlagen, dass in Schritt (c) Ozon mit einer Rate von mindestens 0,1 Gramm(O₃)/Stunde/Gramm(schwarze Masse), zum Beispiel 1 Gramm(O₃)/Stunde/Gramm(schwarze Masse), und/oder mit einer maximalen Rate von 2 Gramm(O₃)/Stunde/Gramm(schwarze Masse) in die Suspension dosiert wird. Dementsprechend ist der Massenstrom an Ozon pro Stunde auch abhängig von der Masse der bereitgestellten schwarzen Masse, die Lithium enthält, in der Suspension. Um Ozon mit einer gleichen Rate von z.B. 1,5 Gramm(O₃)/Stunde/Gramm(schwarze Masse) bereitzustellen, muss der Massenstrom an Ozon z.B. verdoppelt werden, wenn die bereitgestellte schwarze Masse verdoppelt wird.

Es gibt eine untere Grenze für die Dosierung von Ozon in die Suspension, um eine ausreichende Wirkung zu erzielen, während eine obere Grenze vor allem wirtschaftliche Gründe hat, da das vorgeschlagene Rühren die Wirksamkeit des zugeführten Ozons in ausreichender Weise erhöht.

Gemäß einer Weiterentwicklung wird vorgeschlagen, dass in Schritt (c) die Temperatur der Suspension im Bereich von 70°C bis 95°C liegt.

Eine Temperatur von 70°C oder mehr ermöglicht hohe Li-Extraktionsraten von mehr als 90%, die bei 90°C auf mehr als 95% gesteigert werden können. Daher wird die Suspension vorzugsweise erhitzt.

In einer vorteilhaften Ausführungsform wird vorgeschlagen, dass in Verfahrensschritt (c) die Suspension der schwarzen Masse in Wasser einen pH-Wert im Bereich von 6 bis 8, vorzugsweise im Bereich von 7 bis 8, z.B. einen pH-Wert von 8 aufweist.

Die Extraktion von Li in Schritt (c) kann in einer vorteilhaften Ausführungsform in einer neutralen Laugung ohne jegliche pH-Einstellung durchgeführt werden, wobei die Wirkung des Ozons außer Acht gelassen wird, was das Verfahren vereinfacht und somit kostengünstig ist. In diesem Fall kann die Verwendung von Natrium im Li-Rückgewinnungsverfahren noch weiter reduziert werden, vorzugsweise auf null. Wird Ozon als Oxidationsmittel in die Suspension dosiert und die Suspension dabei gerührt, hat die Suspension vorzugsweise einen pH-Wert im Bereich von 6 bis 8, insbesondere im Bereich von 7 bis 8, was Extraktionsraten von etwa über 70 % für Li ermöglicht. Darüber hinaus hat der vorgeschlagene pH-Bereich, insbesondere ein pH-Wert von 7 bis 8, den vorteilhaften Effekt, dass Co, Mn und insbesondere Ni aus der Lösung ausgefällt bzw. nicht in Lösung gebracht wird, was zu einer sehr hohen Selektivität der Li-Extraktion als LiOH in Wasser aus schwarzer Masse führt, während immer noch gute Extraktionsraten für Li erzielt werden.

Dementsprechend kann das Li enthaltende Filtrat aus Schritt (d) auch einen pH-Wert im Bereich von 6 bis 8, insbesondere 7 bis 8, aufweisen, was eine kostengünstige Weiterverarbeitung des Filtrats ermöglicht.

In einer Weiterentwicklung wird vorgeschlagen, dass der Suspension in Schritt (b) und/oder in Schritt (c) eine Säure, vorzugsweise Schwefelsäure (H₂SO₄), zugegeben wird und der pH-Wert der Suspension auf einen pH-Wert im Bereich von 3,5 bis 4,5 abgesenkt wird.

Ein pH-Wert unter 4,5 erhöht die Extraktionsrate von Li sogar noch weiter im Vergleich zu einer Ausführungsform des Verfahrens ohne das Absenken des pH-Werts, was zu Li-Extraktionsraten über 90 % führt, wobei eine Extraktionsrate für Li sogar über 95 % möglich ist. Ein pH-Wert unter 3,5 führt zu einem übermäßigen Verlust an Li-Selektivität.

Während Co und Mn mit der oben vorgeschlagenen Reaktionsdauer, z.B. 4 Stunden, vollständig zurückgewonnen werden können, hat das Absenken des pH-Werts in den Bereich von 3,5 bis 4,5 den Nebeneffekt, dass die Ni-Extraktion bei längerer Dauer zusammen mit der Li-Extraktion zunimmt. Somit wird die Extraktionsrate für Li auf einen sehr hohen Wert erhöht, aber auch Ni wird gelöst.

Bei der Säure handelt es sich vorzugsweise um Schwefelsäure (H₂SO₄), die eine weitere vorteilhafte Wirkung auf das Verfahren zur Rückgewinnung von Metallen haben kann, z.B. für die Kristallisation von Ni-Sulfat. Je nach den gewünschten Endprodukten des Verfahrens zur Rückgewinnung von Metallen können jedoch auch andere Säuren geeignet sein.

Es wird ferner vorgeschlagen, dass nach Schritt (c) eine Base, vorzugsweise Natriumhydroxid (NaOH) und/oder Calciumhydroxid (Ca(OH)₂) und/oder Calciumoxid (CaO), zugegeben und der pH-Wert der Suspension vor Schritt (d) oder der pH-Wert des Filtrats von Schritt (d) auf einen pH-Wert über 6, vorzugsweise auf einen pH-Wert über 9, weiter vorzugsweise auf einen pH-Wert über 10 angehoben wird.

Insbesondere ein pH-Wert von mehr als 9, beispielsweise 10, vorzugsweise ein pH-Wert von mehr als 10, ermöglicht die vollständige Ausfällung des Ni(II) als Hydroxid aus der Li-haltigen Lauge. Dies ist besonders vorteilhaft, wenn der pH-Wert der Suspension mit einer Säure auf unter oder gleich 6 oder insbesondere auf unter oder gleich 4,5 gesenkt wurde, um die Li-Extraktionsrate zu maximieren. Auf diese Weise kann der Nebeneffekt des gelösten Ni umgekehrt werden, was zu einer sehr hohen Extraktionsrate von in Wasser gelöstem Li von über 90 %, z.B. 95 %, führt, während gleichzeitig eine sehr hohe Selektivität oder Reinheit des gelösten Li erreicht wird.

Die Anhebung des pH-Wertes der Suspension oder des Filtrats mit einer Base wird vorzugsweise bei einer Temperatur von 25°C bis 70°C durchgeführt.

Vorzugsweise wird der pH-Wert vor der Filtration der Suspension auf pH > 9, z.B. pH = 10, weiter bevorzugt auf pH > 10 eingestellt.

Dementsprechend enthält das Filtrat Li, das als LiOH in Wasser gelöst ist, mit einer sehr hohen Reinheit. Andere Elemente, die in der schwarzen Masse vorhanden sein können, wie Ni, Co, Mn, Cu, Al, Fe, verbleiben im Rückstand.

Darüber hinaus entfernt die pH-Einstellung mit Ca-haltigen Basen, insbesondere Calciumhydroxid und/oder Calciumoxid, F und/oder P aus der Lösung, so dass ein geringerer Gehalt an F und P im Filtrat erreicht wird.

Die pH-Einstellung mit Na-haltigen Basen, insbesondere Natriumhydroxid, belässt F und P in der Lösung, was das Abtrennen von F aus dem Rückstand und die weitere Verarbeitung des Rückstands ermöglicht, was vorteilhafterweise die Anreicherung von HF in anderen nachgeschalteten Prozessen, z.B. in schwarze Säure, verhindern kann. Die zur Einstellung des pH-Wertes auf die oben beschriebenen Werte erforderliche Na-Menge liegt deutlich unter der Löslichkeitsgrenze und führt nicht zu einer Na-Kontamination des Li-Produkts.

Infolgedessen können das durch das vorgeschlagene Verfahren erzeugte Filtrat, das in Wasser gelöstes LiOH mit hoher Reinheit enthält, und der an Li abgereicherte Rückstand bzw. der Rückstand mit stark reduziertem Li-Gehalt unabhängig voneinander zu der gewünschten Form des Endprodukts der aus der schwarzen Masse zurückgewonnenen Metalle verarbeitet werden. Dabei ist es möglich, die hohe Selektivität und Extraktionsrate für Li des vorgeschlagenen Verfahrens zu nutzen.

In einer Weiterentwicklung wird vorgeschlagen, mindestens 20 Vol.-% des Filtrats, das in Wasser gelöstes LiOH enthält, zu verdampfen.

Eine Erhöhung des Verdampfungsgrades erhöht den Li-Rückgewinnungsgrad in folgenden Li-Rückgewinnungsschritten. Dies ist auf die hohe Löslichkeit von Li-Salzen zurückzuführen, die eine vollständige Ausfällung verhindern, sowie auf die verbesserte Ausfällungskinetik und Ausfällungseffizienz, die sich aus der höheren Li-Ausgangskonzentration ergeben. Die Verdampfungstemperatur beträgt >60°C, wenn ein Vakuum verwendet wird. Bei Atmosphärendruck oder höherem Druck liegt die Temperatur bei >100°C.

Gemäß einer Weiterentwicklung wird vorgeschlagen, Lithiumhydroxid (LiOH) aus dem Filtrat, das in Wasser gelöstes LiOH enthält, vorzugsweise mittels Verdampfung und/oder Kristallisation auszufällen. Dementsprechend wird Lithiumhydroxid (LiOH) vorzugsweise durch Verdampfung und/oder Kristallisation aus dem Filtrat, das in Wasser gelöstes LiOH enthält, extrahiert. Vorzugsweise kann das Lithiumhydroxid (LiOH) ohne weitere Zusatzstoffe extrahiert werden.

Gemäß einer Weiterentwicklung wird vorgeschlagen, dem Filtrat, das in Wasser gelöstes LiOH enthält, einen der folgenden Zusatzstoffe zuzugeben:
- Phosphat-Quelle, vorzugsweise Phosphorsäure (H₃PO₄) und/oder Natriumphosphat (Na₃PO₄), und Ausfällen von Lithiumphosphat (Li₃PO₄) ; und/oder
- Carbonat-Quelle, vorzugsweise Kohlensäure (H₂CO₃) und/oder Kohlendioxid (CO₂) und/oder Natriumcarbonat (Na₂CO₃), und Ausfällen von Lithiumcarbonat (Li₂CO₃).

Das Filtrat, das in Wasser gelöstes LiOH enthält, ist vorzugsweise das Filtrat aus Schritt (d), kann aber auch das Filtrat aus weiteren Filtrationsschritten sein. Da das Additiv dem Filtrat zugesetzt wird, um Li oder Li-Salze auszufällen, wird das Filtrat entsprechend zu einer Suspension.

Je nach gewünschtem Lithiumsalz kann das entsprechende Additiv wie oben vorgeschlagen gewählt werden, so dass das Rückgewinnungsverfahren sehr flexibel in Bezug auf das Li-haltige Endprodukt ist. Lithiumphosphat eignet sich beispielsweise für Li-Ionen-Batterien des LFP-Typs, wobei Lithiumphosphat aufgrund seiner im Vergleich zu Lithiumcarbonat niedrigeren Löslichkeitsgrenze besonders vorteilhaft ist und bessere Rückgewinnungsgrade ermöglicht.

Für die Ausfällung kann eine Temperatur von 50°C bis 95°C verwendet werden. Im Falle von Lithiumphosphat nimmt die Löslichkeit bei höheren Temperaturen zu, allerdings steigt auch die Ausfällungseffizienz. Eine niedrigere Temperatur im Bereich von 50°C bis 60°C erfordert weniger Energie und ist vorteilhaft, wenn eine Kühlung nach einem Verdampfungsschritt nicht erforderlich ist.

In einer Weiterentwicklung wird vorgeschlagen, dem Filtrat, das in Wasser gelöstes Li-OH enthält, eine Base, vorzugsweise Natriumhydroxid (NaOH) und/oder Calciumhydroxid (Ca(OH)₂), zuzugeben. Der pH-Wert wird dadurch vorzugsweise auf oder über 9, weiter vorzugsweise auf 10 und noch bevorzugter auf über 10 erhöht oder gehalten.

Die Zugabe der Base kann verwendet werden, um den pH-Wert zu stabilisieren, wenn dem Filtrat, das in Wasser gelöstes LiOH enthält, Säuren zugegeben werden, um Li auszufällen. Darüber hinaus kann die Base zugegeben werden, um den pH-Wert auf pH >9, z.B. pH 10, zu erhöhen, wodurch die Löslichkeit von Li, insbesondere von Lithiumphosphat (Li₃PO₄), mit steigendem pH-Wert bis zu pH 10 abnimmt. Dadurch sind höhere Rückgewinnungsgrade bei der Ausfällung von Li möglich. Die genannten Basen können zugesetzt werden, um der Auswirkung der zugegebenen Säure auf den pH-Wert bei der Ausfällung von Li entgegenzuwirken, so dass der pH-Wert über 9 gehalten wird.

Die ausgefällten Li-Salze werden vorzugsweise herausgefiltert und die Li-Salze im Rückstand anschließend zu Endprodukten verarbeitet.

Gemäß einer Weiterentwicklung wird vorgeschlagen, das ausgefällte Lithiumphosphat (Li₃PO₄) und/oder Lithiumcarbonat (Li₂CO₃) und/oder Lithiumhydroxid (LiOH) auszufiltern und das Filtrat wieder in die Suspension aus schwarzer Masse und Wasser in Schritt (b) und/oder (c) zu rezirkulieren.

Die Rezirkulation verhindert Li-Verluste in einen Abwasserstrom. Dies ist insbesondere für Lithiumcarbonat (Li₂CO₃) und/oder Lithiumhydroxid (LiOH) vorteilhaft, die höhere Löslichkeitsgrenzen als Lithiumphosphat (Li₃PO₄) haben. Da der Verlust aufgrund der Löslichkeit durch die Rezirkulation minimiert wird, kann die Produktauswahl unabhängig von der Löslichkeitsgrenze erfolgen. Durch die Rezirkulation sind höhere Rückgewinnungsraten möglich, so dass die niedrigeren Rückgewinnungsraten von Lithiumcarbonat und Lithiumhydroxid kompensiert werden und insgesamt eine höhere Rückgewinnungsrate von Li erreicht werden kann. Die Auswahl des gewünschten Lithium-Endprodukts kann daher freier erfolgen, so dass die direkt raffinierbaren Li-Salze Lithiumcarbonat und Lithiumhydroxid gegenüber Lithiumphosphat in sinnvoller Weise ausgewählt werden können.

Die Rezirkulation des Filtrats zurück in die Suspension aus schwarzer Masse und Wasser in Schritt (b) und/oder (c) ist besonders vorteilhaft in Kombination mit der Beibehaltung höherer pH-Werte im vorangegangenen Verfahrensschritt, vorzugsweise über pH 4,5, weiter bevorzugt über pH 6, noch weiter bevorzugt über pH 7, beispielsweise pH 8. So wird der pH-Wert vorzugsweise nicht durch Zugabe einer zusätzlichen Säure vor der Li-Ausfällung gesenkt. Die niedrigere Li-Extraktionsrate für den höheren pH-Wert in Schritt (c) kann durch die Rezirkulation des Filtrats aus der Li-Ausfällung zurück in die Suspension aufgrund der hohen Li-Selektivität des vorgeschlagenen Verfahrens mit Ozon und Rühren kompensiert werden. Dadurch wird weniger Natrium und Säure zur Rückgewinnung von Li aus schwarzer Masse oder verbrauchten Batteriematerialien benötigt, was die Umweltbelastung bei der Aufbereitung von Prozessabwässern noch weiter reduziert.

Gemäß einer Weiterentwicklung wird vorgeschlagen, das rezirkulierte Filtrat periodisch auszuleiten.

Diese Ausleitung ist insbesondere zum Ausleiten von Na und F nützlich. Die Verwendung von Natriumhydroxid (NaOH) als Nahaltige Base, die wie oben beschrieben dem Li-haltigen Filtrat zugegeben wird, führt zu höheren Konzentrationen von Na, das in Lösung rezirkuliert und regelmäßig ausgeleitet werden kann, um eine mögliche Na₂SO₄-Kristallisation zu verhindern, die insgesamt zu einer geringeren Li-Rückgewinnung führen könnte.

Die Verwendung von Calciumhydroxid als Ca-haltige Base kann dazu führen, dass Ca, F und P aus dem an Li abgereicherten Rückstand aus Schritt (d) in weitere Verarbeitungsschritte verbracht werden.

Die hohe Li-Extraktionsrate am Anfang des vorgeschlagenen Verfahrens zur Rückgewinnung von Metallen ermöglicht verschiedene nachgeschaltete Verfahren, die andernfalls ineffizient oder unmöglich sein könnten.

Gemäß einer Weiterentwicklung wird vorgeschlagen, dass der an Li verarmte Rückstand aus Schritt (d) in einem sauren Laugungsschritt (e) gelaugt wird, wobei mindestens eine Säure, vorzugsweise Schwefelsäure (H₂SO₄), und/oder rezirkulierte Säure, insbesondere rezirkulierte schwarze Säure, zugegeben wird und der pH-Wert unter pH 3 gesenkt wird. Vorzugsweise wird dem sauren Laugungsschritt (e) ein Reduktionsmittel, vorzugsweise Schwefeldioxid (SO₂), zugegeben.

Gemäß einer Weiterentwicklung wird vorgeschlagen, dem Laugenwasser und/oder der Suspension aus Schritt (e) eine Calcium-Quelle, vorzugsweise Calciumhydroxid (Ca(OH)₂) und/oder Calciumoxid (CaO) und/oder Calciumcarbonat (CaCO₃), zuzugeben und die Suspension in einem Schritt (f) zu filtrieren.

Gemäß einer Weiterentwicklung wird vorgeschlagen, dem Filtrat aus Schritt (f) unter Rühren in einem Schritt (g) Ozon als Oxidationsmittel zuzudosieren, um einen pH-Wert im Bereich von 2 bis 4, vorzugsweise ein pH-Wert von 3, aufrechtzuerhalten und die resultierende Suspension zu filtrieren.

Mit dem vorgeschlagenen Verfahren lassen sich Rückgewinnungsgrade von >95% für Co, >99% für Mn und <3% für Ni erreichen. Als Ergebnis der Filtration in Schritt (g) werden Co und/oder Mn im Rückstand zurückgewonnen, wobei Ni im Filtrat von Schritt (g) extrahiert wird.

Gemäß einer Weiterentwicklung wird vorgeschlagen, dass in einem Schritt (h) Schwefelsäure (H₂SO₄) zu dem Filtrat von Schritt (g) zugegeben wird, und die Konzentration der Schwefelsäure (H₂SO₄) auf mindestens 500 g/l erhöht wird, um Ni-Sulfat zu kristallisieren.

Das kristallisierte Ni-Sulfat wird vorzugsweise durch Filtration abgetrennt. Die filtrierte Lösung oder das Filtrat wird als schwarze Säure bezeichnet.

Vorzugsweise wird die oben genannte filtrierte Lösung, die als schwarze Säure bezeichnet wird, aus Schritt (h) in den sauren Laugungsschritt (e) rezirkuliert.

Im Folgenden wird die Erfindung anhand von bevorzugten Ausführungsformen unter Bezugnahme auf die Zeichnungen erläutert. Darin zeigt
- Fig. 1: den Extraktionsgrad EE in % von Li, Ni, Co und Mn über dem pH-Wert;
- Fig. 2: die Lösungskonzentration SC in g/l von Li, Ni, Co und Mn über die Zeit in min;
- Fig. 3: der Rückgewinnungsgrad Ni RE in % von Ni über dem pH-Wert; und
- Fig. 4: die Konzentration der Lithiumlösung Li SC in g/l nach Ausfällung von Lithiumphosphat über dem pH-Wert.

In einer ersten bevorzugten Ausführungsform des Verfahrens zur Rückgewinnung von Metallen werden die Verfahrensschritte zur Abtrennung eines Filtrats, das in Wasser gelöstes LiOH enthält, von einem an Li verarmten Rückstand der schwarzen Masse im folgenden Beispiel beschrieben.

Die schwarze Masse wird in Schritt (a) als metallhaltiges, insbesondere Li, Ausgangsmaterial bereitgestellt. Die schwarze Masse ist aus Li-Ionen-Batterieschrott hergestellt, der zu einem Pulver verarbeitet wurde. Die Mineralogie der schwarzen Masse kann in Abhängigkeit von den Ausgangsmaterialien bzw. Schrottmaterialien variieren. Zwei Mineralogien der schwarzen Masse sind zum Beispiel wie folgt:
Schwarze Masse #1: C₁; CO_{0,2069} Li_{0,755} Ni_{0,793} O₂; Ni₁O₁; Al₂O₃; Schwarze Masse #2: C₁; Fe₁Ni₃; Mn₁O₁; Cu_{0,8}Fe_{0,2}; C_{0,5}H_{8,9}Fe₃O_{8,95}; Al₁Li₁O₂; Cu₁O₁;
Eine schwarze Masse, die in diesem Beispiel verwendet wird, kann eine Zusammensetzung der Elemente gemäß Tabelle 1 aufweisen:

**Tabelle 1:**

| Element | Li | Ni | Co | Mn | F | P |
|---|---|---|---|---|---|---|
| schwarze Masse [Gew.%] | 4,3 | 13,5 | 14,6 | 9,9 | 2,3 | 0,37 |

Der Rest kann zum Beispiel Elemente wie C, H, O, Fe, Al, Cu enthalten.

Die schwarze Masse wird in einem Schritt (b) in Wasser suspendiert, wobei 50 g der schwarzen Masse mit der Zusammensetzung in Tabelle 1 in 1 l Wasser suspendiert werden.

Die Suspension wird auf 70°C erhitzt und Ozon (Os) mit 0,9 l/min in die Suspension dosiert, wobei die Suspension während der Ozondosierung in einem Schritt (c) gerührt wird. Die Suspension wird intensiv gerührt, wodurch eine Scherrate in der Suspension von ca. 29000s⁻¹ entsteht. Der pH-Wert pendelt sich auf pH 8 ein. Die Reaktion bei 70°C wird nach 4 Stunden beendet.

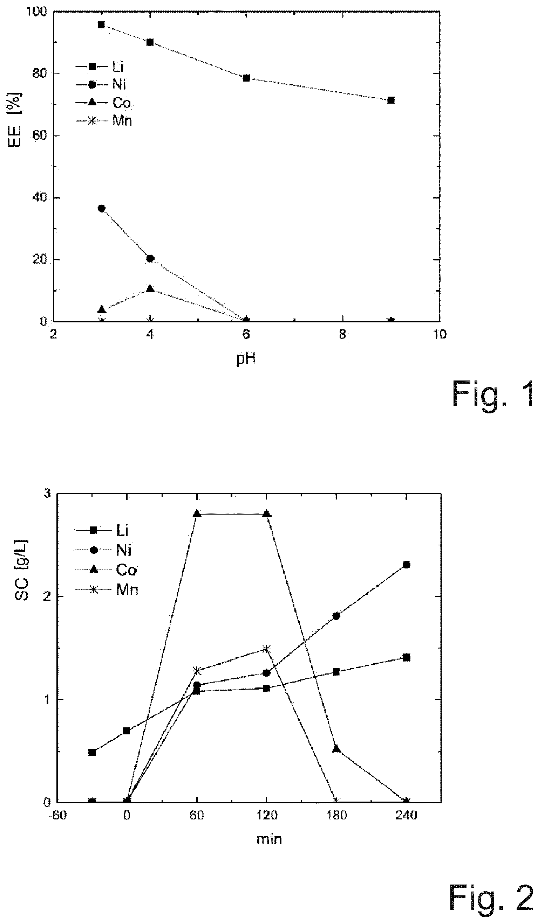

In einem folgenden Schritt (d) wird die Suspension filtriert, wobei das Filtrat etwa 70% des Lithiums der ursprünglichen schwarzen Masse enthält, das in Wasser gelöst ist. Dementsprechend enthält der Rückstand etwa 30 % des Lithiums der ursprünglichen schwarzen Masse, wobei der Rückstand weiterhin im Wesentlichen das gesamte Ni, Co, Mn enthält, so dass eine hohe Reinheit des Li in der Lösung für die weitere Verarbeitung der Lösung zur Verfügung steht. Dies ist auch in Figur 1 dargestellt, die den Extraktionsgrad EE von Li, Ni, Co und Mn in Abhängigkeit vom pH-Wert zeigt. Darin wird die hohe Selektivität für Li des Laugungsverfahrens mit Ozon bei erhöhten Temperaturen der Suspension von schwarzer Masse in Wasser für pH-Werte größer als 6 gezeigt, wobei das Rühren der Suspension mit sehr hohen Scherrate bei gleichzeitiger Zufuhr von Ozon zur Suspension wesentlich ist, um die beabsichtigte Oxidation der schwarzen Masse mit Ozon zu erreichen.

In einer zweiten bevorzugten Ausführungsform des Verfahrens zur Rückgewinnung von Metallen werden die Verfahrensschritte der Abtrennung eines Filtrats, das in Wasser gelöstes LiOH enthält, von einem an Li verarmten Rückstand der schwarzen Masse im folgenden Beispiel beschrieben.

Abweichend von der ersten Ausführungsform wird eine Säure zu der Suspension aus schwarzer Masse und Wasser zugegeben nach Beginn von Schritt (c), nämlich der Dosierung von Ozon in die Suspension, während die Suspension gerührt wird. In dieser bevorzugten Ausführungsform wird 50%ige Schwefelsäure (H₂SO₄) zugegeben, um den pH-Wert auf 4 zu senken. Die Reaktion wird dann 4 Stunden lang fortgesetzt.

Fig. 2 zeigt die Lösungskonzentration SC in g/l von Li, Ni, Co und Mn über die Zeit in min, und dass der Grad der Oxidation von Co und Mn von der Reaktionsdauer abhängt. Co und Mn werden zu Co(III)- und Mn(IV)-Oxiden oxidiert, so dass bei längerer Dauer Co und Mn vollständig aus der Lösung zurückgewonnen werden können. Die Extraktion von Li und Ni nimmt mit einer längeren Dauer bei dem oben genannten pH-Wert zu.

Daher kann die Extraktionsrate für Li auf über 90 % erhöht werden, verglichen mit ca. 70 % bei der ersten Ausführungsform, bei der der Suspension keine zusätzliche Säure zugeführt wird. Dies steht auch im Einklang mit den Daten aus Fig. 1. Daher wird in der zweiten Ausführungsform eine höhere Extraktionsrate für Li erreicht, während eine gewisse Selektivität des Verfahrens aufgegeben wird, wobei Ni teilweise als Ni(II) extrahiert wird.

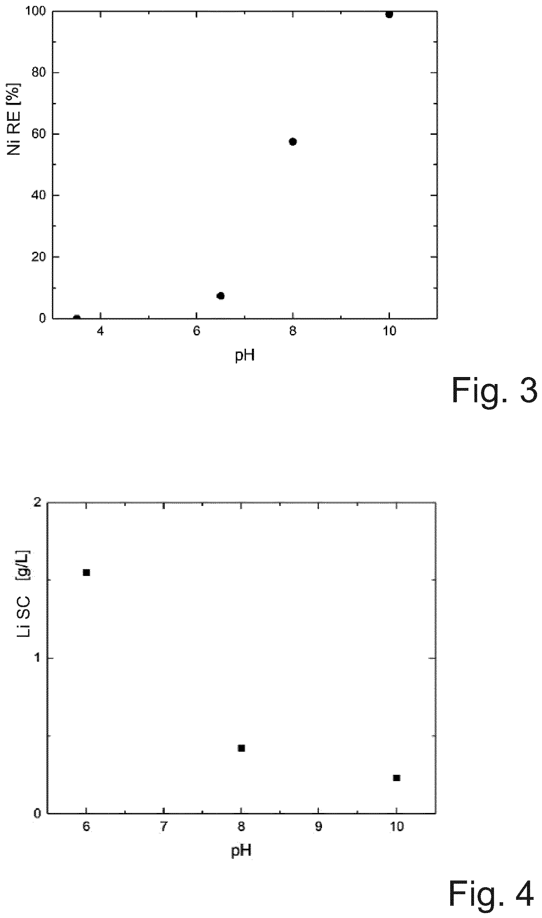

Nach der obigen Reaktion bzw. dem Verfahrensschritt (c) wird in dieser vorteilhaften Ausführungsform zu 500 ml der obigen Suspension bei 50 °C eine 12-ml-Suspension von Calciumoxid (CaO) zugegeben, wodurch der pH-Wert auf 10 erhöht wird. Die Reaktion ist nach 1,5 Stunden beendet. Das Ni in der Lösung wird ausgefällt, wobei der Grad der Ausfällung Ni RE über dem pH-Wert in Fig. 3 dargestellt ist. Demnach führt eine Erhöhung des pH-Wertes auf pH 10 zu einer vollständigen Rückgewinnung des gelösten Ni.

Auch andere Basen, wie Natriumhydroxid (NaOH) und/oder Calciumhydroxid (Ca(OH)₂), können verwendet werden. Eine typische Lösungskonzentration nach der pH-Einstellung auf pH 10 ist in Tabelle 2 für verschiedene Basen dargestellt.

**Tabelle 2:**

| Base | Li | Ni | Co | Mn | Cu | Al |
|---|---|---|---|---|---|---|
| Ca-basiert [g/l] | 1,63 | 0,00 | 0,00 | 0,00 | 0,00 | 0,00 |
| Na-basiert [g/l] | 1,51 | 0,00 | 0,00 | 0,00 | 0,00 | 0,00 |

| Base | Fe | F | P | Ca | Na | |
|---|---|---|---|---|---|---|
| Ca-basiert [g/l] | 0,00 | 0,24 | 0,00 | 0,30 | 0,00 | |
| Na-basiert [g/l] | 0,00 | 0,39 | 0,047 | 0,00 | 0,99 | |

Wie bei der ersten Ausführungsform wird die Suspension in einem nachfolgenden Schritt (d) filtriert, wobei das Filtrat der zweiten Ausführungsform über 90% des Lithiums der ursprünglichen schwarzen Masse enthält, das in Wasser gelöst ist. Somit ist der Rückstand noch stärker an Li verarmt und enthält weniger als 10 % des Lithiums der ursprünglichen schwarzen Masse.

Wie aus Tabelle 2 hervorgeht, weist das Verfahren eine sehr hohe Extraktionsrate und eine hohe Selektivität für Li auf und ist zudem sehr kostengünstig.

In einer dritten bevorzugten Ausführungsform wird die weitere Verfahrensweise zur Rückgewinnung von Lithium aus dem in Wasser gelösten LiOH-haltigen Filtrat der ersten oder zweiten Ausführungsform oder einer beliebigen Ausführungsform nach einem erfindungsgemäßen Verfahren beschrieben.

Das Filtrat, das in Wasser gelöstes LiOH enthält, wird verdampft, um das Lithium zu konzentrieren, wobei der Verdampfungsgrad >20 Vol.% beträgt. Eine Erhöhung des Verdampfungsgrades erhöht den Li-Rückgewinnungsgrad im nachfolgenden Li-Rückgewinnungsprozess.

Das Verfahren nach der zweiten Ausführungsform kann zum Beispiel wie folgt aussehen. Die Li-haltige Lösung, z.B. 300 ml, wird auf 95°C erhitzt, wobei der pH-Wert 10 beträgt. Die Anfangskonzentrationen der Lösung sind in Tabelle 3 angegeben.

**Tabelle 3:**

| [g/l] | Li | Ni | Co | Mn | F | P | Na |
|---|---|---|---|---|---|---|---|
| Anfangslösung | 1,68 | 0,00 | 0,00 | 0,00 | 0,41 | 0,071 | 1,093 |

Phosphorsäure H₃PO₄ wird zugesetzt, um Li₃PO₄ zu bilden, wobei NaOH und/oder in einer alternativen Ausführungsform Ca(OH)₂ zugesetzt wird, um einen pH-Wert von > 10 zu erhalten. Die Aufrechterhaltung eines pH-Werts von > 10 erhöht die Li-Rückgewinnung, da die Löslichkeit von Li₃PO₄ in der Lösung mit steigendem pH-Wert bis zu einem Wert von 10 abnimmt. Das in der Lösung verbleibende Lithium Li SC aufgrund der Löslichkeit von Li-Phosphat ist in Fig. 4 dargestellt.

Für das Ausfällen kann eine Temperatur von 50 °C bis 95 °C verwendet werden. Die Löslichkeit von Li₃PO₄ nimmt bei höheren Temperaturen zu, allerdings steigt auch die Effizienz der Ausfällung. Eine niedrigere Temperatur um 50 °C erfordert weniger Energie und wird bevorzugt, wenn eine Kühlung von dem Verdampfungsschritt nicht erforderlich ist.

Im obigen Beispiel werden der Lösung 1,29 ml 85% H₃PO₄ zugesetzt. Der pH-Wert wird durch Zugabe von 55,5 ml 1 M NaOH bei 10 gehalten. Die Reaktion bei 95 °C wird nach 1 h beendet. Die Filtratkonzentration ist in Tabelle 4 angegeben. Die Zusammensetzung der Li-Ausfällung enthält 19,57 Gew.-% Li.

Das Li-haltige Filtrat nach der Li-Rückgewinnung wird in die Suspension aus schwarzer Masse und Wasser aus Schritt (b) und/oder in die Laugung, insbesondere in die neutrale Laugung aus Schritt (c), als Ergänzungslösung zurückgeführt. Durch die Rückführung werden Li-Verluste in einen Abfallstrom vermieden. Ein periodischer Abzug des Filtrats wird verwendet, wenn Nabasierte Basen verwendet werden, wobei der Abzug dazu dient, Na und F zu begrenzen. Die Rezirkulation des Li-Rückgewinnungsfiltrats ist aufgrund der geringen Verunreinigungen im Filtrat möglich, wobei eine Filtratanalyse in Tabelle 4 dargestellt ist.

**Tabelle 4:**

| [g/l] | Li | Ni | Co | Mn | F | P | Na |
|---|---|---|---|---|---|---|---|
| Filtrat für Rezirkulation | 0,223 | 0,00 | 0,00 | 0,00 | 0,12 | 0,13 | 4,867 |

Die Rezirkulation ist besonders vorteilhaft in Kombination mit der ersten Ausführungsform, bei der der pH-Wert nicht durch eine zugesetzte Säure gesenkt wird, so dass weniger Basen erforderlich sind, um den pH-Wert der Lösung anzuheben, damit Ni wieder ausgefällt wird, und damit hohe pH-Werte erreicht werden, die die Li-Rückgewinnung steigern. Ferner können auch niedrigere pH-Werte verwendet werden (siehe Fig. 4), da das in der Lösung verbleibende Lithium Li SC bei niedrigeren pH-Werten als 10 nicht an den Abfallstrom verloren geht.

Die Rückgewinnung der verbleibenden Elemente aus der an Li abgereicherten schwarzen Masse oder dem Rückstand, einschließlich z.B. Ni, Co und/oder Mn, wird in der folgenden vorteilhaften Ausführungsform beschrieben.

In einem ersten Schritt wird der Rückstand aus der ersten oder zweiten Ausführungsform oder ein Rückstand im Allgemeinen nach dem vorgeschlagenen Verfahren mit Schwefelsäure (H₂SO₄) und SO₂ (gasförmig) in einem sauren Laugungsschritt gelaugt. Die Temperatur beträgt 70 °C und das ORP < 200 mV. Der pH-Wert wird durch Rezirkulation von Säure oder schwarzer Säure, siehe Verfahrensschritt (h), und/oder durch Zugabe von Schwefelsäure auf < 2 eingestellt. Alle verbleibenden Metalle werden aus der schwarzen Masse ausgelaugt. Der Graphit verbleibt im Rückstand. Die Suspension wird nach dem Auslaugen vorzugsweise nicht gefiltert.

In einem zweiten Schritt wird Fluor (F) aus der sauren Laugung durch Zugabe einer Ca-Quelle, z.B. Calciumhydroxid (Ca(OH)₂), Calciumoxid (CaO) und/oder Calciumcarbonat (CaCO₃), ausgefällt. Die HF und F-Ion werden mit Ca als CaF₂ ausgefällt. Nach der Ausfällung wird die Suspension filtriert.

In einem dritten Schritt werden Co und Mn zurückgewonnen. Dazu wird dem Filtrat der F-Ausfällung Ozon (Os) zudosiert. Der pH-Wert wird durch Zugabe von Calciumhydroxid (Ca(OH)₂) auf pH 3 eingestellt. Co und Mn fallen aus der Lösung aus. Die Rückgewinnungsquoten liegen bei > 95 % Co, > 99 % Mn, < 3 % Ni.

In einem vierten Schritt der Rückgewinnung der verbleibenden Elemente aus der an Li verarmten schwarzen Masse oder dem Rückstand werden dem Filtrat der Co- und Mn-Rückgewinnung Schwefelsäure (H₂SO₄) und rezirkulierte Säure bzw. schwarze Säure in Konzentrationen von 150 bis 400 g/L H₂SO₄ zugegeben. Die Verdampfungstemperatur beträgt > 100 °C. Der Verdampfungsgrad soll eine H₂SO₄-Konzentration von 800 g/L erreichen. Ni, Cu und Al kristallisieren aus der Lösung aus und werden zurückgewonnen. Die gefilterte Lösung wird als schwarze Säure bezeichnet und vorzugsweise in die saure Laugungsstufe zurückgeführt.

Im Allgemeinen ist das vorgeschlagene Verfahren zur Rückgewinnung von Metallen aus schwarzer Masse mit hydrometallurgischen Verfahren möglich.

## Patentansprüche

1. Verfahren zur Rückgewinnung von Metallen aus schwarzer Masse, **gekennzeichnet durch** die folgenden Schritte in der folgenden Reihenfolge:
- Schritt (a) Bereitstellung einer schwarzen Masse, die Li enthält;
- Schritt (b) Zugabe von Wasser zu der schwarzen Masse und Herstellung einer Suspension der schwarzen Masse in Wasser;
- Schritt (c) Dosierung von Ozon als Oxidationsmittel zu der Suspension unter Rühren der Suspension;
- Schritt (d) Filtrieren und Abtrennen des Filtrats, das in Wasser gelöstes LiOH enthält, von einem an Li verarmten Rückstand der schwarzen Masse, wobei
- in Schritt (c) die Suspension mit einer Scherrate von größer als 11000s⁻¹ in der Suspension gerührt wird.

2. Verfahren nach Anspruch 1, **dadurch gekennzeichnet, dass**
- in Schritt (c) die Suspension mit einer Scherrate von größer als 25000s⁻¹ in der Suspension gerührt wird.

3. Verfahren nach einem der vorangehenden Ansprüche, **dadurch gekennzeichnet, dass**
- Schritt (c) für mindestens 3 Stunden durchgeführt wird.

4. Verfahren nach einem der vorangehenden Ansprüche, **dadurch gekennzeichnet, dass**
- in Schritt (c) Ozon mit einer Rate von mindestens 0,1 Gramm (Oa)/Stunde/Gramm (schwarze Masse) und/oder mit einer maximalen Rate von 2 Gramm (Oa)/Stunde/Gramm (schwarze Masse) in die Suspension dosiert wird.

5. Verfahren nach einem der vorangehenden Ansprüche, **dadurch gekennzeichnet, dass**
- in Schritt (c) die Temperatur der Suspension im Bereich von 70°C bis 95°C liegt.

6. Verfahren nach einem der vorangehenden Ansprüche, **dadurch gekennzeichnet, dass**
- in Schritt (c) die Suspension der schwarzen Masse in Wasser einen pH-Wert im Bereich von 6 bis 8 aufweist.

7. Verfahren nach einem der Ansprüche 1-5, **gekennzeichnet durch** den Schritt,
- Zugabe einer Säure zu der Suspension in Schritt (b) und/oder Schritt (c) und Absenken des pH-Wertes der Suspension auf einen pH-Wert im Bereich zwischen 3,5 und 4,5.

8. Verfahren nach Anspruch 7, **gekennzeichnet durch** den Schritt,
- nach Schritt (c) Zugabe einer Base; und
- Anheben des pH-Wertes der Suspension vor Schritt (d) oder Anheben des pH-Wertes des Filtrats von Schritt (d) auf einen pH-Wert von über 6.

9. Verfahren nach einem der vorangehenden Ansprüche, **gekennzeichnet durch** den Schritt:
- Verdampfen von mindestens 20 Vol.-% des Filtrats, das in Wasser gelöstes LiOH enthält.

10. Verfahren nach einem der Ansprüche 1 bis 6 oder 8 oder nach Anspruch 9 unter Rückbezug auf einen der Ansprüche 1 bis 6 oder 8, **gekennzeichnet durch** den Schritt:
- Ausfällen von Lithiumhydroxid (LiOH) aus dem Filtrat, das in Wasser gelöstes LiOH enthält, vorzugsweise mittels Verdampfung und/oder Kristallisation.

11. Verfahren nach einem der Ansprüche 1 bis 9, **gekennzeichnet durch**:
- Zugabe eines der folgenden Zusatzstoffe zu dem Filtrat, das in Wasser gelöstes LiOH enthält:
- Phosphat-Quelle, vorzugsweise Phosphorsäure (H₃PO₄) und/oder Natriumphosphat (Na₃PO₄), und Ausfällen von Lithiumphosphat (Li₃PO₄); und/oder
- Carbonat-Quelle, vorzugsweise Kohlensäure (H₂CO₃) und/oder Kohlendioxid (CO₂) und/oder Natriumcarbonat (Na₂CO₃), und Ausfällen von Lithiumcarbonat (Li₂CO₃).

12. Verfahren nach Anspruch 10 oder 11, **gekennzeichnet durch**
- Zugabe einer Base, vorzugsweise Natriumhydroxid (NaOH) und/oder Calciumhydroxid (Ca(OH)₂) zu dem Filtrat, das in Wasser gelöstes LiOH enthält.

13. Verfahren nach einem der Ansprüche 10 bis 12, **gekennzeichnet durch**
- Ausfiltern des ausgefällten Lithiumphosphat (Li₃PO₄) und/oder Lithiumcarbonat (Li₂CO₃) und/oder Lithiumhydroxid (LiOH) und Rezirkulation des Filtrats wieder in die Suspension aus schwarzer Masse und Wasser in Schritt (b) und/oder (c).

14. Verfahren nach Anspruch 13, **gekennzeichnet durch**
- periodische Ausleitung des rezirkulierten Filtrats.

15. Verfahren nach einem der vorangehenden Ansprüche, **dadurch gekennzeichnet, dass**
- der an Li verarmte Rückstand aus Schritt (d) in einem sauren Laugungsschritt (e) gelaugt wird, wobei mindestens eine Säure, vorzugsweise Schwefelsäure (H₂SO₄), und/oder rezirkulierte Säure zugegeben wird und der pH-Wert unter pH 3 gesenkt wird.

16. Verfahren nach Anspruch 15, **gekennzeichnet durch**
- Zugeben eines Reduktionsmittels, vorzugsweise Schwefeldioxid (SO₂), zu dem sauren Laugungsschritt (e).

17. Verfahren nach Anspruch 15 oder 16, **gekennzeichnet durch**
- Zugeben einer Calcium-Quelle, vorzugsweise Calciumhydroxid (Ca(OH)₂) und/oder Calciumoxid (CaO) und/oder Calciumcarbonat (CaCO₃), zu der Lauge und/oder der Suspension aus Schritt (e) und Filtrieren der Suspension in einem Schritt (f).

18. Verfahren nach Anspruch 17, **gekennzeichnet durch**
- in einem Schritt (g) Dosieren von Ozon als Oxidationsmittel zu dem Filtrat von Schritt (f) unter Rühren; und
- Aufrechterhalten eines pH-Wertes im Bereich von 2 bis 4; und
- Filtrieren der resultierenden Suspension.

19. Verfahren nach Anspruch 18, **dadurch gekennzeichnet, dass**
- in einem Schritt (h) Schwefelsäure (H₂SO₄) zu dem Filtrat aus Schritt (g) zugegeben wird; und
- die Konzentration der Schwefelsäure (H₂SO₄) auf mindestens 500 g/l erhöht wird, um Ni-Sulfat zu kristallisieren.

## Claims

1. Process for recovery of metals from black mass, **characterized by** the following steps in the following order:
- step (a) providing black mass containing Li;
- step (b) adding water to the black mass and creating suspension of black mass in water;
- step (c) dosing ozone as an oxidant to the suspension while stirring the suspension;
- step (d) filtering and separating the filtrate containing LiOH dissolved in water from a Li depleted residue of the black mass, wherein
- in step (c) the suspension is stirred with a shear rate greater than 11000s⁻¹ within the suspension.

2. Process according to claim 1, **characterized in that**
- in step (c) the suspension is stirred with a shear rate greater than 25000s⁻¹ within the suspension.

3. Process according to any one of the preceding claims, **characterized in that**
- step (c) is performed for at least 3h.

4. Process according to any one of the preceding claims, **characterized in that**
- in step (c) ozone is dosed to the suspension with a rate of at least 0.1 gram(O₃)/hour/gram(black mass) and/or with a maximum rate of 2 gram (Os)/hour/gram (black mass).

5. Process according to any one of the preceding claims, **characterized in that**
- in step (c) the temperature of the suspension is in the range from 70°C to 95°C.

6. Process according to any one of the preceding claims, characterized that
- in step (c) the suspension of black mass in water has a pH value in the range between 6 to 8.

7. Process according to any one of claims 1 to 5, **characterized by** the step,
- adding an acid to the suspension in step (b) and/or step (c) and dropping the pH value of the suspension to a pH value in the range between 3.5 and 4.5.

8. Process according to claim 7, **characterized by** the step,
- after step (c) adding a caustic; and
- raising the pH value of the suspension before step (d) or raising the pH value of the filtrate of step (d) to a pH value higher than 6.

9. Process according to any one of the preceding claims, **characterized by** the step:
- evaporation of at least 20 vol% of the filtrate containing LiOH dissolved in water.

10. Process according to any one of claims 1 to 6 or 8 or according to claim 9 with reference to any one of claims 1 to 6 or 8, **characterized by** the step:
- precipitation lithium hydroxide (LiOH) from the filtrate containing LiOH dissolved in water, preferably by means of evaporation and/or crystallization.

11. Process according to any one of the claims 1 to 9, **characterized by**:
- adding one of the following additives to the filtrate containing LiOH dissolved in water:
- phosphate source, preferably phosphoric acid (H₃PO₄) and/or sodium phosphate (Na₃PO₄), and precipitating lithium phosphate (Li₃PO₄); and/or
- carbonate source, preferably carbonic acid (H₂CO₃) and/or carbon dioxide (CO₂) and/or sodium carbonate (Na₂CO₃), and precipitating lithium carbonate (Li₂CO₃).

12. Process according to claim 10 or 11, **characterized by**
- adding a caustic, preferably sodium hydroxide (NaOH) and/or calcium hydroxide (Ca(OH)₂), to the filtrate containing LiOH dissolved in water.

13. Process according to any one of the claims 10 to 12, **characterized by**
- filtering the precipitated lithium phosphate (Li₃PO₄) and/or lithium carbonate (Li₂CO₃) and/or lithium hydroxide (LiOH) out and recirculate the filtrate back to the suspension of black mass and water in step (b) and/or (c).

14. Process according to claim 13, **characterized by**
- bleeding the recirculated filtrate periodically.

15. Process according to any one of the preceding claims, **characterized in that**
- the Li depleted residue of step (d) is leached in an acidic leach step (e), wherein at least one acid, preferably sulfuric acid (H₂SO₄), and/or recirculated acid is added and the pH value is dropped below pH 3.

16. Process according to claim 15, **characterized by**
- adding a reductant, preferably sulfur dioxide (SO₂), to the acidic leach step (e).

17. Process according to claim 15 or 16, **characterized by**
- adding a calcium source, preferably calcium hydroxide (Ca(OH)₂) and/or calcium oxide (CaO) and/or calcium carbonate (CaCO₃), to the leachate and/or suspension of step (e) and filtering the suspension in a step (f).

18. Process according to claim 17, **characterized by**
- in a step (g) dosing ozone as an oxidant to the filtrate of step (f) while stirring; and
- maintaining a pH value in the range of 2 to 4; and
- filtering the resulting suspension.

19. Process according to claim 18, **characterized in that**
- in a step (h) sulfuric acid (H₂SO₄) is added to the filtrate of step (g); and
- the sulfuric acid (H₂SO₄) concentration is raised to at least 500 g/l to crystallize Ni-sulfate.

## Revendications

1. Procédé pour récupérer des métaux à partir d'une masse noire, **caractérisé par** les étapes suivantes dans l'ordre suivant :
- étape (a) consistant à fournir une masse noire contenant du Li ;
- étape (b) consistant à ajouter de l'eau à la masse noire et préparer une suspension de la masse noire dans l'eau ;
- étape (c) consistant à doser de l'ozone en tant qu'agent oxydant dans la suspension en agitant la suspension ;
- étape (d) consistant à filtrer et séparer le filtrat, qui contient du LiOH dissous dans l'eau, d'un résidu appauvri en Li de la masse noire, dans lequel,
- à l'étape (c), la suspension est agitée avec une vitesse de cisaillement supérieur à 11 000s⁻¹ dans la suspension.

2. Procédé selon la revendication 1, **caractérisé en ce que**
- à l'étape (c), la suspension est agitée avec une vitesse de cisaillement supérieur à 25 000s⁻¹ dans la suspension.

3. Procédé selon l'une des revendications précédentes, **caractérisé en ce que**
- l'étape (c) est réalisée pendant au moins 3 heures.

4. Procédé selon l'une des revendications précédentes, **caractérisé en ce que**
- à l'étape (c), l'ozone est dosé à une vitesse d'au moins 0,1 gramme (O₃)/heure/gramme (masse noire) et/ou à une vitesse maximale de 2 grammes (O₃)/heure/gramme (masse noire) dans la suspension.

5. Procédé selon l'une des revendications précédentes, **caractérisé en ce que**
- à l'étape (c), la température de la suspension est dans la plage de 70 °C à 95 °C.

6. Procédé selon l'une des revendications précédentes, **caractérisé en ce que**
- à l'étape (c), la suspension de la masse noire dans l'eau a une valeur de pH dans la plage de 6 à 8.

7. Procédé selon l'une des étapes 1 à 5, **caractérisé par** l'étape consistant à :
- ajouter un acide à la suspension à l'étape (b) et/ou à l'étape (c) et réduire la valeur de pH de la suspension à une valeur de pH située dans la plage comprise entre 3,5 et 4,5.

8. Procédé selon la revendication 7, **caractérisé par** l'étape consistant à :
- après l'étape (c), ajouter une base ; et
- augmenter la valeur de pH de la suspension avant l'étape (d) ou augmenter la valeur de pH du filtrat de l'étape (d) à une valeur de pH supérieure à 6.

9. Procédé selon l'une des revendications précédentes, **caractérisé par** l'étape consistant à:
- évaporer au moins 20 % en volume du filtrat contenant du LiOH dissous dans l'eau.

10. Procédé selon l'une des revendications 1 à 6 ou 8 ou selon la revendication 9 lorsque dépendante de l'une des revendications 1 à 6 ou 8, **caractérisé par** l'étape :
- précipiter de l'hydroxyde de lithium (LiOH) à partir du filtrat, qui contient du LiOH dissous dans l'eau, de préférence par évaporation et/ou cristallisation.

11. Procédé selon l'une des revendications 1 à 9, **caractérisé par** :
- l'ajout de l'un des additifs suivants au filtrat contenant du LiOH dissous dans l'eau :
- source de phosphate, de préférence de l'acide phosphorique (H₃PO₄) et/ou du phosphate de sodium (Na₃PO₄) et la précipitation du phosphate de lithium (Li₃PO₄); et/ou
- source de carbonate, de préférence de l'acide carbonique (H₂CO₃) et/ou du dioxyde de carbone (CO₂) et/ou du carbonate de sodium (Na₂CO₃), et la précipitation du carbonate de lithium (Li₂CO₃).

12. Procédé selon la revendication 10 ou 11, **caractérisé par**
- l'ajout d'une base, de préférence de l'hydroxyde de sodium (NaOH) et/ou de l'hydroxyde de calcium (Ca(OH)₂) au filtrat, contenant du LiOH dissous dans l'eau.

13. Procédé selon l'une des revendications 10 à 12, **caractérisé par** :
- la filtration du phosphate de lithium (Li₃PO₄) précipité et/ou du carbonate de lithium (Li₂CO₃) et/ou de l'hydroxyde de lithium (LiOH) et la recirculation du filtrat dans la suspension constituée de la masse noire et de l'eau de l'étape (b) et/ou (c).

14. Procédé selon la revendication 13, **caractérisé par**
- l'évacuation périodique du filtrat remis en circulation.

15. Procédé selon l'une des revendications précédentes, **caractérisé en ce que**
- le résidu appauvri en Li de l'étape (d) est lixivié à une étape de lixiviation acide (e), dans lequel au moins un acide, de préférence de l'acide sulfurique (H₂SO₄) et/ou de l'acide remis en circulation, est ajouté et la valeur de pH est abaissée à un pH inférieur à 3.

16. Procédé selon la revendication 15, **caractérisé par**
- l'ajout d'un agent réducteur, de préférence du dioxyde de soufre (SO₂), à l'étape de lixiviation acide (e).

17. Procédé selon la revendication 15 ou 16, **caractérisé par**
- l'ajout d'une source de calcium, de préférence de l'hydroxyde de calcium (Ca(OH)₂) et/ou de l'oxyde de calcium (CaO) et/ou du carbonate de calcium (CaCO₃), à la lessive et/ou à la suspension de l'étape (e) et la filtration de la suspension à une étape (f).

18. Procédé selon la revendication 17, **caractérisé par**
- à une étape (g), le dosage de l'ozone en tant qu'agent oxydant dans le filtrat de l'étape (f) sous agitation ; et
- le maintien d'une valeur de pH dans la plage de 2 à 4 ; et
- la filtration de la suspension résultante.

19. Procédé selon la revendication 18, **caractérisé en ce que**
- à une étape (h), de l'acide sulfurique (H₂SO₄) est ajouté au filtrat de l'étape (g) ; et
- la concentration de l'acide sulfurique (H₂SO₄) est augmentée à au moins 500 g/l afin de cristalliser le sulfate de Ni.
